# EUROPÄISCHE PATENTSCHRIFT

(11) **EP 3 261 864 B1**
(45) Veröffentlichungstag und Bekanntmachung des Hinweises auf die Patenterteilung: **16.12.2020**
(21) Anmeldenummer: 16703435.4
(22) Anmeldetag: 06.02.2016
(51) Int. Cl.: B60G 17/019, F16F 9/05, G01B 7/02, G01B 7/06, G01B 7/14, G01B 7/315

(54) **VERFAHREN UND SYSTEM ZUR HÖHENMESSUNG IN EINEM FAHRZEUG**
METHOD AND SYSTEM FOR MEASURING HEIGHT IN A VEHICLE
PROCÉDÉ ET SYSTÈME DE MESURE DE HAUTEUR DANS UN VÉHICULE

(30) Priorität: 24.02.2015 DE 102015002167
(43) Veröffentlichungstag der Anmeldung: 03.01.2018
(73) Patentinhaber: WABCO GmbH, 30453 Hannover (DE)
(72) Erfinder: BREHMER, Thomas, 51674 Wiehl (DE); GROETZINGER, Stefan, 30989 Gehrden (DE); HÖFLER, Siegfried, 30165 Hannover (DE); LUCAS, Johann, 31319 Sehnde (DE); UHL, Joachim, 51588 Nürnbrecht (DE)
(74) Vertreter: Koschnitzki, Thomas
(86) Internationale Anmeldenummer: PCT/EP2016/000207
(87) Internationale Veröffentlichungsnummer: WO 2016/134823

(56) Entgegenhaltungen:
- EP-A1- 1 857 305
- EP-A1- 2 735 760
- DE-C1- 19 701 530
- US-A- 4 804 961
- US-A1- 2007 171 036
- US-A1- 2014 306 388

## Beschreibung

Die Erfindung betrifft ein Verfahren zur Höhenmessung in einem Fahrzeug durch Bestimmung des Abstands zwischen Fahrzeugchassis und Fahrzeugachse oder damit verbundener Teile, wobei eine erste Einrichtung mit erstem Sender und erstem Empfänger einerseits und eine zweite Einrichtung mit zweitem Sender und zweitem Empfänger andererseits zusammenwirken, wobei der erste Sender ein elektromagnetisches Feld erzeugt, der zweite Empfänger das elektromagnetische Feld detektiert, die zweite Einrichtung mit dem zweiten Sender aus dem detektierten Feld ein Signal erzeugt und sendet, welches mit dem Abstand vom ersten Sender zum zweiten Empfänger korreliert, und die erste Einrichtung mit dem ersten Empfänger das Signal empfängt. Daneben betrifft die Erfindung ein System zur Höhenmessung, eine elektronisch geregelte Luftfederung mit dem System und ein Fahrzeug mit dem System. Nutzfahrzeuge mit Luftfederung sind üblicherweise mit einer automatischen Niveauregelung ausgestattet. Ein beladenes Fahrzeug weist dadurch die gleiche Höhe auf wie ein unbeladenes Fahrzeug, d. h., der Abstand zwischen Fahrzeugchassis und Fahrzeugachse ist beim beladenen Fahrzeug nicht kleiner als beim unbeladenen Fahrzeug.

Teil der automatischen Niveauregulierung ist häufig eine mechanische Kopplung zwischen Fahrzeugchassis und Fahrzeugachse, nämlich eine Koppelstange, die üblicherweise mit einem Wegsensor zur Erfassung der Höhendifferenz verbunden ist. Durch Bewegung der Koppelstange und Betätigung des Wegsensors werden über die zugehörige Fahrzeugelektronik Druckluftventile zum Belüften oder Entlüften der Luftfederung angesteuert. Wenn das Fahrzeug beladen wird, drückt das Fahrzeugchassis auf die Fahrzeugachse, der Abstand verringert sich, die Bewegung der Koppelstange veranlasst das Öffnen eines Belüftungsventils, so dass das Fahrzeugchassis wieder auf die ursprüngliche Höhe angehoben wird. In umgekehrter Richtung erfolgt die Niveauregulierung beim Entladen des Fahrzeugs. Die Höhenbestimmung ist durch die Kombination Koppelstange-Wegsensor und die Anbindung an die elektronisch geregelte Luftfederung mechanisch aufwendig.

Für die Niveauregulierung maßgeblich ist die Änderung des Abstands zwischen Fahrzeugchassis und Fahrzeugachse. Gemessen werden kann dieser Abstand direkt oder über Hilfspunkte, also über mit Fahrzeugchassis und Fahrzeugachse verbundenen Teilen, etwa einem Fahrwerkrahmen als Teil des Fahrzeugchassis einerseits und Teilen der Radaufhängung, welche zur Fahrzeugachse gehört, andererseits.

In der WO 2005/049346 A1 sind verschiedene Ausführungen einer Niveauregelung offenbart, mit einem oder ohne ein Luftfederventil.

Aus der DE 197 01 530 C1 ist ein Federungssystem für Lastkraftwagen mit Gasdruckfedern und Niveauregulierung bekannt. Innerhalb der Gasdruckfeder findet eine Abstandsmessung statt, durch die Übersendung eines Ultraschallsignals, die Rücksendung eines elektromagnetischen Signals und die Zeitnahme von der Aussendung des Ultraschallsignals bis zum Eingang des elektromagnetischen Signals.

Aus der EP 1 834 190 B1 ist ein Abstandsanzeigesystem für Luftfedern bekannt, mit einer Sende-Empfangsvorrichtung auf einer Seite und einem Transponder mit Antenne auf einer anderen Seite. Mit der Antenne wird eine Rückstreumodulation ausgestrahlt, wobei sich die Modulation der Amplitude abhängig vom Abstand verändert.

In der EP 1 857 305 A1 ist ein luftgefedertes Fahrwerk mit Niveau-Messeinrichtung offenbart, mit einer aktiven Sensoreinheit und einem passiven Element. Die aktive Sensoreinheit versorgt das passive Element über ein magnetisches Wechselfeld mit Energie, das passive Element antwortet auf eine Anfrage der aktiven Sensoreinheit und die aktive Sensoreinheit wertet die Feldstärke der Antwort des passiven Elements aus.

Die bei der Formulierung des Anspruchs 1 berücksichtigte US 2007/0171036 A1 offenbart eine Höhenmessung in einer Luftfeder eines Fahrzeugs. Über ein erstes Sender-Empfänger-Paar wird eine elektromagnetische Welle übertragen. Daraus wird eine zweite elektromagnetische Welle erzeugt in Relation zum Abstand zwischen Sender und Empfänger. Die zweite elektromagnetische Welle wird über ein zweites Sender-Empfänger-Paar in Gegenrichtung zur ersten elektromagnetischen Welle übertragen.

In der US 2014/0306388 A1 ist ein Verfahren zur Höhenmessung in einer Luftfeder eines Fahrzeugs offenbart. Ein oberer Sender übersendet elektromagnetische Energie an einen unteren Empfänger, welcher daraus elektrische Energie erzeugt und einem unteren Sender bereitstellt. Dieser übersendet ein elektromagnetisches Signal an einen oberen Empfänger. Letzterer ermittelt aus dem empfangenen Signal den Abstand.

Aufgabe der vorliegenden Erfindung ist die Schaffung einer einfachen und sicheren Alternative zu den vorhandenen Verfahren. Insbesondere sollen der Ersatz der mechanischen Koppelstange und die Anbindung an eine elektronisch geregelte Luftfederung einfach möglich sein.

Das erfindungsgemäße Verfahren weist die Merkmale des Anspruchs 1 auf. Dabei ist vorgesehen, dass der erste Sender ein elektromagnetisches Feld erzeugt, dass der zweite Empfänger das elektromagnetische Feld detektiert, dass die zweite Einrichtung mit dem zweiten Sender aus dem detektierten Feld ein Signal erzeugt und sendet, welches mit dem Abstand vom ersten Sender zum zweiten Empfänger korreliert, und dass die erste Einrichtung mit dem ersten Empfänger das Signal empfängt. Die erste Einrichtung verfügt dann über ein Signal, welches den Abstand vom ersten Sender zum zweiten Empfänger repräsentiert. Das Signal kann über übliche Schnittstellen einem Steuergerät für die elektronisch geregelte Luftfederung zugeführt werden. Insbesondere ist vorgesehen, dass die zweite Einrichtung mit dem zweiten Sender nur dann ein Signal sendet, wenn vom zweiten Empfänger eine Veränderung des elektromagnetischen Feldes detektiert wurde.

Die erste Einrichtung ist dem Fahrzeugchassis zugeordnet, die zweite Einrichtung der Fahrzeugachse (oder jeweils damit verbundenen Teilen). Möglich ist auch eine umgekehrte Anordnung mit der ersten Einrichtung an einem der Fahrzeugachse zuordneten Teil. Vorzugsweise ist die erste Einrichtung mit erstem Sender und erstem Empfänger aber am Fahrzeugchassis oder an einem Teil desselben gehalten.

Nach einem weiteren Gedanken der Erfindung ist das vom ersten Sender erzeugte elektromagnetische Feld ein Feld mit niedriger Frequenz, vorzugsweise unter 135 kHz. Insbesondere weist das elektromagnetische Feld eine Frequenz von 125 kHz auf.

Gemäß einem weiteren Gedanken der Erfindung ist das vom zweiten Sender gesendete Signal ein elektromagnetisches Signal im Hochfrequenzbereich oder im Ultrahochfrequenzbereich, insbesondere mit etwa 433 MHz oder 868 MHz.

Die Verwendung unterschiedlicher Frequenzen für das Signal des ersten Senders und das Signal des zweiten Senders verringert eine gegenseitige Beeinflussung. Das elektromagnetische Feld niedriger Frequenz ist vorzugsweise direkt auf den zweiten Empfänger ausgerichtet durch Gestaltung und Anordnung einer Antenne des ersten Senders. Das elektromagnetische Signal im Hochfrequenzbereich oder im Ultrahochfrequenzbereich ist vorzugsweise verschlüsselt und nur vom ersten Empfänger lesbar. Fehlfunktionen durch eng beieinander stehende Fahrzeuge sind dadurch ausgeschlossen.

Nach einem weiteren Gedanken der Erfindung detektiert der zweite Empfänger die Stärke des elektromagnetischen Feldes. Letzteres wird vom ersten Sender erzeugt und ausgestrahlt.

Nach einem weiteren Gedanken der Erfindung ist vorgesehen, dass die erste Einrichtung aus dem empfangenen Signal ein standardisiertes Ausgangssignal erzeugt und bereitstellt, vorzugsweise ein PWM-Signal oder ein analoges Spannungssignal. Dieses Ausgangssignal kann von Steuergeräten für die Luftfederung für die Zwecke der Niveauregelung oder für andere mit einer Höhenmessung verbundene Zwecke verarbeitet werden.

Vorteilhafterweise wird eine Fehlerkompensation des Signals durchgeführt, vorzugsweise vor Generierung des Ausgangssignals.

Erfindungsgemäß ist vorgesehen, dass die zweite Einrichtung mit dem zweiten Sender nur dann ein Signal sendet, wenn vom zweiten Empfänger eine Veränderung des elektromagnetischen Feldes detektiert wurde. Dabei kann es auf die Stärke oder den zeitlichen Verlauf der Veränderung ankommen. Insbesondere ist folgender Ablauf vorgesehen:
Die zweite Einrichtung speichert einen Wert ab, der mit dem detektierten elektromagnetischen Feld korreliert. Nach Ablauf eines Zeitintervalls, zum Beispiel nach 20 ms, wird ein neuer Wert detektiert und mit dem zuvor gespeicherten (alten) Wert verglichen. Nur wenn die derart berechnete Differenz der Werte eine vorgegebene Differenz überschreitet, werden der neue Wert gespeichert und der alte Wert gelöscht. Auch erzeugt die zweite Einrichtung aus dem neuen Wert das Signal und sendet dieses. Wenn die Differenz der Werte zu klein ist, bleibt der alte Wert gespeichert und ein Signal wird nicht erzeugt oder gesendet. Durch diesen Ablauf wird die Energieversorgung der zweiten Einrichtung weniger belastet.

Nach einem weiteren Gedanken der Erfindung ist vorgesehen, dass das vom zweiten Sender gesendete Signal eine Absender-Kennung enthält. Die Kennung ermöglicht eine Unterscheidung zwischen verschiedenen Sendern, so dass Fehler durch benachbart zueinander stehende Fahrzeuge vermieden werden. Die erste Einrichtung verarbeitet nur Signale mit der "richtigen" Absender-Kennung, das heißt von der zugeordneten zweiten Einrichtung.

Nach einem weiteren Gedanken der Erfindung ist vorgesehen, dass die zweite Einrichtung ihrerseits nur nach einer Identitätsprüfung und/oder nach einem Synchronisationsvorgang mit der zugeordneten ersten Einrichtung sendet (Listen-Before-Talk-Prinzip). Hierdurch wird die Gefahr einer gegenseitigen Beeinflussung mehrerer Einrichtungen weiter verringert.

Das erfindungsgemäße System weist die Merkmale des Anspruchs 8 auf. Dabei ist der erste Sender zum Erzeugen eines elektromagnetischen Feldes vorgesehen und der zweite Empfänger zum Detektieren des elektromagnetischen Feldes. Die zweite Einrichtung mit dem zweiten Sender ist zum Erzeugen und Senden eines Signals vorgesehen, wobei das Signal mit dem Abstand vom ersten Sender zum zweiten Empfänger korreliert. Die erste Einrichtung mit dem ersten Empfänger ist zum Empfang des gesendeten Signals vorgesehen, vorzugsweise auch zur Weiterleitung und/oder Weiterverarbeitung des Signals. Insbesondere sendet die zweite Einrichtung mit dem zweiten Sender nur dann ein Signal, wenn vom zweiten Empfänger eine Veränderung des elektromagnetischen Feldes detektiert wurde.

Nach einem weiteren Gedanken der Erfindung ist die erste Einrichtung dem Fahrzeugchassis zugeordnet und vorzugsweise mit einem elektrischen Netz des Fahrzeugs - einem Bordnetz - verbunden. Entsprechend ist die zweite Einrichtung vorzugsweise der Fahrzeugachse zugeordnet und insbesondere nicht mit dem Bordnetz verbunden. Die Zuordnung kann aber auch genau umgekehrt sein. Nach einem weiteren Gedanken der Erfindung weist die zweite Einrichtung eine eigene elektrische Energiequelle auf, welche vorzugsweise von einer elektrischen Energiequelle der ersten Einrichtung oder von einer Energiequelle des Fahrzeugs unabhängig ist. Die eigene elektrische Energiequelle ist insbesondere eine Langzeit-Batterie.

Nach einem weiteren Gedanken der Erfindung ist vorgesehen, dass eine elektrische Energiequelle für vorzugsweise nur eine der beiden Einrichtungen eine Lithium-Ionen-Batterie ist, insbesondere eine Lithium-Thionylchlorid-Batterie. Vorzugsweise ist die Lithium-Ionen-Batterie als elektrische Energiequelle für die zweite Einrichtung vorgesehen.

Nach einem weiteren Gedanken der Erfindung weist eine elektrische Energiequelle für vorzugsweise nur eine der beiden Einrichtungen eine Kapazität von 10 Ah oder weniger auf, insbesondere von etwa 2,5 Ah. Vorzugsweise beträgt die Ausgangs-Spannung der Energiequelle etwa 5,4 V oder weniger, insbesondere etwa 3,6 V.

Nach einem weiteren Gedanken der Erfindung sind die beiden Einrichtungen außerhalb von Luftfederbälgen am Fahrzeug angebracht. Montage und Austausch der Einrichtungen sind dadurch besonders einfach.

Verfahren und System können vorgesehen sein um eine Fahrzeugachse insgesamt zu detektieren. Dann genügt eine einfache Ausführung mit einer ersten Einrichtung und einer zweiten Einrichtung. Alternativ können beide Enden einer Fahrzeugachse detektiert werden, bzw. die Räder der Fahrzeugachse. Dann sind jedem Ende der Fahrzeugachse jeweils eine erste Einrichtung und eine zweite Einrichtung zugeordnet. Schließlich können auch mehrere Fahrzeugachsen insgesamt oder an beiden Enden detektiert werden. Es sind dann entsprechend viele erste und zweite Einrichtungen vorgesehen.

Eine erfindungsgemäße, elektronisch geregelte Luftfederung weist die Merkmale des Anspruchs 15 auf, nämlich ein erfindungsgemäßes System. Als Luftfedern sind vorzugsweise Luftfederbälge vorgesehen.

Nach einem weiteren Gedanken der Erfindung ist die Luftfederung mit einer manuell betätigbaren Ventilanordnung zum Heben und/oder Senken eines Fahrzeugaufbaus/Fahrzeugchassis versehen. Eine manuell betätigbare Ventilanordnung mit Hebe- und Senkventilen ist beispielsweise in der WO 2005/049346 A1 gezeigt.

Nach einem weiteren Gedanken der Erfindung weist die Luftfederung ein Luftfederventil auf. Eine Luftfederung mit Luftfederventil ist beispielsweise in der genannten WO 2005/049346 A1 gezeigt.

Nach einem weiteren Gedanken der Erfindung ist die Luftfederung mit einem Drucksensor zur Messung des innerhalb eines Luftfederbalgs herrschenden Drucks versehen. Hierzu reicht es aus, wenn der Drucksensor druckseitig mit den Luftfederbälgen der Luftfederung verbunden ist, wie beispielsweise in der bereits genannten WO 2005/049346 A1 dargestellt.

Ein erfindungsgemäßes Fahrzeug weist die Merkmale des Anspruchs 19 auf. Bestandteil ist ein erfindungsgemäßes System, insbesondere eine erfindungsgemäße Luftfederung.

Ein elektronisches Steuergerät kann für eine elektronisch geregelte Luftfederung vorgesehen : sein. Das Steuergerät selbst ist nicht Teil der Erfindung. Vorhanden ist eine Schnittstelle zum Empfang des von der ersten Einrichtung weitergeleiteten oder weiterverarbeiteten Signals und mit einer Software zur Verarbeitung des Signals. Das von der Schnittstelle empfangene Signal wird vorzugsweise als Ausgangssignal der ersten Einrichtung bezeichnet. Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:

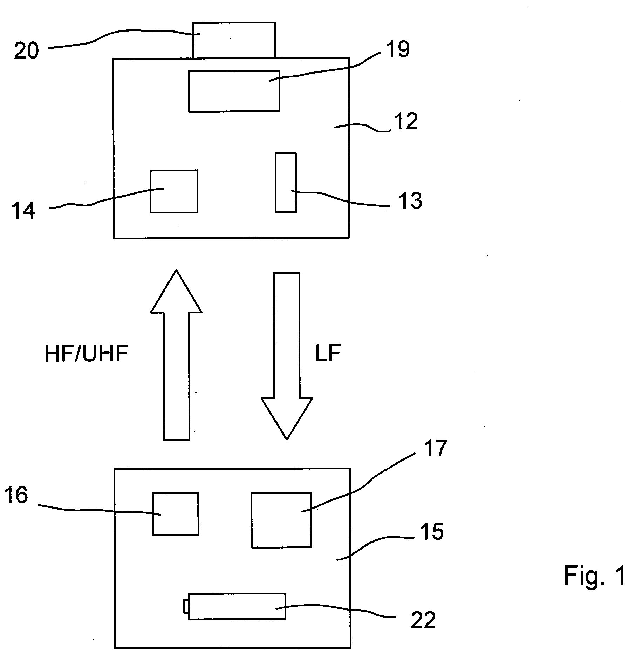

Fig. 1 zwei Einrichtungen zum Senden und Empfangen von Signalen in schematischer Darstellung,

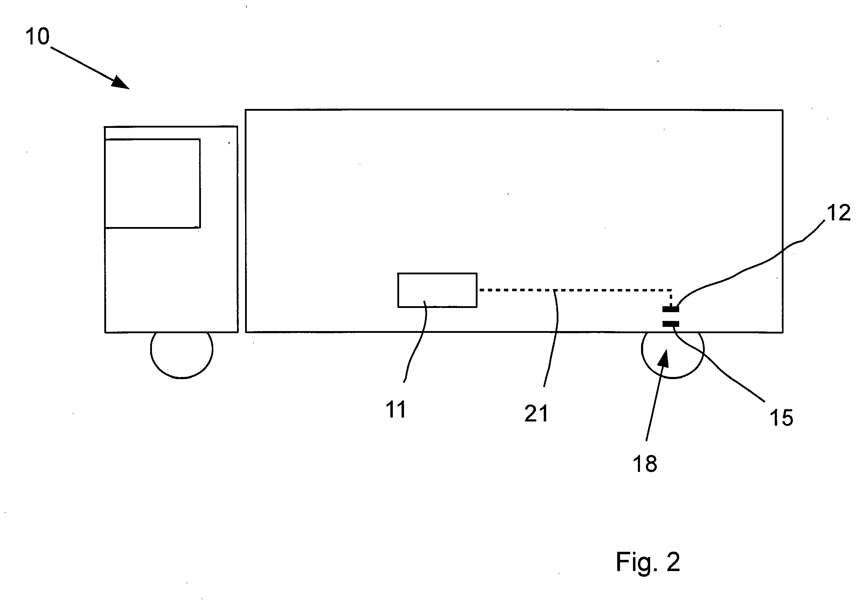

Fig. 2 einen Lastkraftwagen (Motorwagen) mit den beiden Einrichtungen gemäß Fig. 1.

Ein Lastkraftwagen 10 ist in bekannter Weise mit einer nicht näher gezeigten Luftfederung und einem zugehörigen Steuergerät 11 ausgestattet.

Im Zusammenhang mit der Luftfederung ist wenigstens ein System zur Höhenmessung im Lastkraftwagen 10 installiert. Bestandteile des Systems sind eine erste Einrichtung 12 mit erstem Sender 13 und erstem Empfänger 14 sowie eine zweite Einrichtung 15 mit zweitem Sender 16 und zweitem Empfänger 17. Die Einrichtungen 12, 15 sind zum Senden und Empfangen sowie zur Signalverarbeitung vorgesehen und ausgestattet.

Die beiden Einrichtungen 12, 15 sind aufeinander ausgerichtet und benachbart aber mit Abstand zueinander angeordnet, so dass eine Übertragung elektromagnetischer Signale möglich ist. Dabei ist die erste Einrichtung 12 einem Fahrzeugchassis zugeordnet, insbesondere an einem Fahrwerkrahmen gehalten. Die zweite Einrichtung 15 ist vorzugsweise einer Fahrzeugachse zugeordnet und insbesondere an einem Achsträger gehalten. Die Anordnung ist derart gewählt, dass die erste Einrichtung 12 etwa vertikal über der zweiten Einrichtung 15 gehalten ist.

Mit Hilfe der beiden Einrichtungen 12, 15 findet eine Höhenmessung statt bzw. eine Messung der Änderung des Abstands zwischen Fahrzeugchassis und Fahrzeugachse. Die beiden Einrichtungen 12, 15 sind im Bereich einer Hinterachse 18 gehalten. Alternativ ist das System mit den beiden Einrichtungen 12, 15 zweifach vorgesehen, nämlich einmal links und einmal rechts an der Hinterachse 18. Möglich sind noch weitere Messpunkte (Systeme), etwa an einer Vorderachse.

Die Höhenmessung erfolgt zyklisch in kurzen Abständen, vorzugsweise in Abständen von 25 ms oder weniger.

Der erste Sender 13 beinhaltet eine Antenne und erzeugt ein niedrigfrequentes magnetisches Wechselfeld von 125 kHz. Die genannte Antenne ist in Richtung auf die zweite Einrichtung 15 ausgerichtet. Entsprechend ist das magnetische Wechselfeld ausgerichtet.

Der zweite Empfänger 17 beinhaltet eine Empfangsantenne mit einem elektronischen Schaltkreis zur Bestimmung der Feldstärke des niedrigfrequenten Magnetfelds. Die damit verbundene Fähigkeit des Schaltkreises wird als RSSI (Received Signal Strength Indication) bezeichnet. RSSI findet unter anderem Verwendung in drahtlosen Netzwerken nach dem Standard IEEE 802.11.

Für die Verarbeitung der vom zweiten Empfänger 17 ermittelten Feldstärke kann die zweite Einrichtung 15 einen im Zusammenhang mit schlüssellosen Fahrzeug-Zugangssystemen (keyless entry/go) bekannten elektrischen Schaltkreis aufweisen, etwa den NCF 2952 oder NCF 2951 des Herstellers NXP Semiconductors N. V.

Die vom zweiten Empfänger 17 zyklisch, z.B. alle 20 ms ermittelte Feldstärke korreliert mit dem Abstand der beiden Einrichtungen 12, 15 voneinander. Entsprechend sind Änderungen des Abstands über die Änderung der Feldstärke bestimmbar. Die vom zweiten Empfänger 17 ermittelte Größe der Feldstärke wird in der zweiten Einrichtung 15 umgewandelt in ein hochfrequentes (bzw. ultrahochfrequentes) Signal mit vorzugsweise 433 bzw. 868 MHz. Außerdem wird das Signal verschlüsselt und/oder mit einer Absender-Kennung versehen und vom zweiten Sender 16 ausgestrahlt.

Der erste Empfänger 14 empfängt und prüft (und entschlüsselt) das ausgestrahlte Signal. In der ersten Einrichtung 12 wird das empfangene Signal umgewandelt in ein standardisiertes Ausgangssignal. Hierzu ist in der ersten Einrichtung 12 eine Schnittstelle 19 vorgesehen.

Die erste Einrichtung 12 weist außerdem eine insbesondere mehrpolige Buchse 20 zum Anschluss einer Verbindungsleitung 21 auf. Letztere ist zur Weiterleitung des Ausgangssignals an das Steuergerät 11 angeschlossen und verbindet so das System zur Höhenmessung mit dem Steuergerät 11.

Die zweite Einrichtung 15 wird über eine eingebaute Langzeit-Batterie 22 mit elektrischer Energie versorgt. Im Gegensatz dazu ist die erste Einrichtung 12 über die Leitung 21 an ein nicht gezeigtes Bordnetz des Lastkraftwagens 10 angeschlossen. Die Leitung 21 weist mindestens drei Leiter auf, nämlich für Masse, Gerätespannung und Signal.

Bei Anordnung von zwei Systemen an der Hinterachse sind beide über Leitungen an das Steuergerät 11 angeschlossen. Das Steuergerät kann dann auch eine einseitige Höhenänderung detektieren und regeln.

Mit dem beschriebenen System ist eine ganze Reihe von Vorteilen verknüpft. Es sind keine mechanischen Teile vorhanden, die abnutzen können. Es treten keine Ungenauigkeiten auf, wie sie durch Lagerspiel und/oder Querauslenkung einer Koppelstange hervorgerufen werden. Zusätzliche Verbindungen sind nicht erforderlich, vorzugsweise nur der Anschluss an ein Steuergerät. Die Materialkosten sind gering. Es findet eine direkte Höhenmessung statt, das heißt, die Abstandsmessung ist nicht von einer Drehbewegung abhängig, wie bei einer schwenkbaren Koppelstange. Dadurch findet keine sinusförmige Verzerrung der Messwerte statt. Die vorgesehenen Einrichtungen können direkt am Fahrzeugchassis und an der Fahrzeugachse angebaut werden, an fast beliebigen Stellen. Ein Einbau in die Luftfedern ist nicht erforderlich. Im Fehlerfall kann schnell und kostengünstig ein Austausch durchgeführt werden.

## Patentansprüche

1. Verfahren zur Höhenmessung in einem Fahrzeug durch Bestimmung des Abstands zwischen Fahrzeugchassis und Fahrzeugachse oder damit verbundener Teile, wobei eine erste Einrichtung (12) mit erstem Sender (13) und erstem Empfänger (14) einerseits und eine zweite Einrichtung (15) mit zweitem Sender (16) und zweitem Empfänger (17) andererseits zusammenwirken,
wobei der erste Sender (13) ein elektromagnetisches Feld erzeugt,
der zweite Empfänger (17) das elektromagnetische Feld detektiert,
die zweite Einrichtung (15) mit dem zweiten Sender (16) aus dem detektierten Feld ein Signal erzeugt und sendet, welches mit dem Abstand vom ersten Sender (13) zum zweiten Empfänger (17) korreliert,
und die erste Einrichtung (12) mit dem ersten Empfänger (14) das Signal empfängt, **dadurch gekennzeichnet, dass** die zweite Einrichtung (15) mit dem zweiten Sender (16) nur dann ein Signal sendet, wenn vom zweiten Empfänger (17) eine Veränderung des elektromagnetischen Feldes detektiert wurde.

2. Verfahren nach Anspruch 1, **dadurch gekennzeichnet, dass** das vom ersten Sender (13) erzeugte elektromagnetische Feld ein Feld mit niedriger Frequenz ist, vorzugsweise unter 135 kHz.

3. Verfahren nach Anspruch 1 oder 2, **dadurch gekennzeichnet, dass** das vom zweiten Sender (16) gesendete Signal ein elektromagnetisches Signal im Hochfrequenzbereich oder im Ultrahochfrequenzbereich ist, insbesondere mit etwa 433 MHz oder 868 MHz.

4. Verfahren nach Anspruch 1 oder einem der weiteren Ansprüche, **dadurch gekennzeichnet, dass** der zweite Empfänger (17) die Stärke des elektromagnetischen Feldes detektiert.

5. Verfahren nach Anspruch 1 oder einem der weiteren Ansprüche, **dadurch gekennzeichnet, dass** die erste Einrichtung aus dem empfangenen Signal ein standardisiertes Ausgangssignal erzeugt und bereitstellt.

6. Verfahren nach Anspruch 1 oder einem der weiteren Ansprüche, **dadurch gekennzeichnet, dass** die zweite Einrichtung (15) mit dem zweiten Sender (16) nur dann ein Signal sendet, wenn die Veränderung des elektromagnetischen Feldes eine vorgegebene Differenz überschreitet.

7. Verfahren nach Anspruch 1 oder einem der weiteren Ansprüche, **dadurch gekennzeichnet, dass** das vom zweiten Sender (16) gesendete Signal eine Absender-Kennung enthält.

8. System zur Höhenmessung in einem Fahrzeug durch Bestimmung des Abstands zwischen Fahrzeugchassis und Fahrzeugachse oder damit verbundener Teile,
wobei eine erste Einrichtung (12) mit erstem Sender (13) und erstem Empfänger (14) einerseits und eine zweite Einrichtung (15) mit zweitem Sender (16) und zweitem Empfänger (17) andererseits zusammenwirken, insbesondere zur Durchführung des Verfahrens nach einem der voranstehenden Ansprüche,
wobei der erste Sender (13) zum Erzeugen eines elektromagnetischen Feldes vorgesehen ist,
der zweite Empfänger (17) zum Detektieren des elektromagnetischen Feldes vorgesehen ist,
die zweite Einrichtung mit dem zweiten Sender (16) zum Erzeugen und Senden eines Signals vorgesehen ist, wobei das Signal mit dem Abstand vom ersten Sender (13) zum zweiten Empfänger (17) korreliert,
und die erste Einrichtung (12) mit dem ersten Empfänger (14) zum Empfang des Signals vorgesehen ist,
**dadurch gekennzeichnet, dass** die zweite Einrichtung (15) mit dem zweiten Sender (16) nur dann ein Signal sendet, wenn vom zweiten Empfänger (17) eine Veränderung des elektromagnetischen Feldes detektiert wurde.

9. System nach Anspruch 8, **dadurch gekennzeichnet, dass** die erste Einrichtung (12) dem Fahrzeugchassis zugeordnet ist und vorzugsweise mit einem elektrischen Netz des Fahrzeugs - einem Bordnetz - verbunden ist.

10. System nach Anspruch 8 oder 9, **dadurch gekennzeichnet, dass** die zweite Einrichtung (15) eine eigene elektrische Energiequelle aufweist, welche vorzugsweise von einer elektrischen Energiequelle der ersten Einrichtung oder von einer Energiequelle des Fahrzeugs unabhängig ist.

11. System nach einem der Ansprüche 8 - 10, **dadurch gekennzeichnet, dass** eine elektrische Energiequelle für vorzugsweise nur eine der beiden Einrichtungen (12, 15) eine Lithium-Ionen-Batterie ist, insbesondere eine Lithium-Thionylchlorid-Batterie.

12. System nach einem der Ansprüche 8 - 11, **dadurch gekennzeichnet, dass** eine elektrische Energiequelle für vorzugsweise nur eine der beiden Einrichtungen (12, 15) eine Kapazität kleiner oder gleich 10 Ah aufweist.

13. System nach einem der Ansprüche 8 - 12, **dadurch gekennzeichnet, dass** eine elektrische Energiequelle für vorzugsweise nur eine der beiden Einrichtungen (12, 15) eine Ausgangs-Spannung von etwa 5,4 V oder weniger, insbesondere etwa 3,6 V aufweist.

14. System nach einem der Ansprüche 8 - 13, **dadurch gekennzeichnet, dass** die beiden Einrichtungen (12, 15) außerhalb von Luftfederbälgen am Fahrzeug angebracht sind.

15. Elektronisch geregelte Luftfederung für ein Fahrzeug, mit einem System nach einem der Ansprüche 8 - 14.

16. Luftfederung nach Anspruch 15, **gekennzeichnet durch** eine manuell betätigbare Ventilanordnung zum Heben und/oder Senken eines Fahrzeugaufbaus/Fahrzeugchassis.

17. Luftfederung nach Anspruch 15 oder 16, **gekennzeichnet durch** ein Luftfederventil.

18. Luftfederung nach einem der Ansprüche 15 bis 17, **gekennzeichnet durch** einen Drucksensor zur Messung des innerhalb eines Luftfederbalgs herrschenden Drucks.

19. Fahrzeug mit einem System nach einem der Ansprüche 8 - 14, insbesondere mit einer Luftfederung nach einem der Ansprüche 15 bis 18.

## Claims

1. Method for measuring height in a vehicle by determining the distance between the vehicle chassis and the vehicle axis or parts connected thereto, wherein a first device (12) with a first transmitter (13) and first receiver (14), on the one hand, and a second device (15) with a second transmitter (16) and second receiver (17), on the other, interact, wherein the first transmitter (13) generates an electromagnetic field, the second receiver (17) detects the electromagnetic field, the second device (15) with the second transmitter (16) generates and transmits, from the detected field, a signal which correlates with the distance from the first transmitter (13) to the second receiver (17),
and the first device (12) with the first receiver (14) receives the signal,
**characterized in that** the second device (15) with the second transmitter (16) transmits a signal only if a change in the electromagnetic field has been detected by the second receiver (17).

2. Method according to Claim 1, **characterized in that** the electromagnetic field which is generated by the first transmitter (13) is a field with a low frequency, preferably below 135 kHz.

3. Method according to Claim 1 or 2, **characterized in that** the signal which is transmitted by the second transmitter (16) is an electromagnetic signal in the high frequency range or in the ultrahigh frequency range, particularly at approximately 433 MHz or 868 MHz.

4. Method according to Claim 1 or one of the further claims, **characterized in that** the second receiver (17) detects the strength of the electromagnetic field.

5. Method according to Claim 1 or one of the further claims, **characterized in that** the first device generates and makes available a standardized output signal from the received signal.

6. Method according to Claim 1 or one of the further claims, **characterized in that** the second device (15) with the second transmitter (16) transmits a signal only when the change in the electromagnetic field exceeds a predefined difference.

7. Method according to Claim 1 or one of the further claims, **characterized in that** the signal which is transmitted by the second transmitter (16) contains a source identifier.

8. System for measuring height in a vehicle by determining the distance between the vehicle chassis and the vehicle axle or parts connected thereto,
wherein a first device (12) with a first transmitter (13) and first receiver (14), on the one hand, and a second device (15) with a second transmitter (16) and second receiver (17), on the other, interact, in particular in order to carry out the method according to one of the preceding claims, wherein the first transmitter (13) is provided for generating an electromagnetic field,
the second receiver (17) is provided for detecting the electromagnetic field,
the second device with the second transmitter (16) is provided for generating and transmitting a signal, wherein the signal correlates with the distance from the first transmitter (13) to the second receiver (17),
and the first device (12) with the first receiver (14) is provided for receiving the signal,
**characterized in that** the second device (15) with the second transmitter (16) transmits a signal only when a change in the electromagnetic field has been detected by the second receiver (17).

9. System according to Claim 8, **characterized in that** the first device (12) is assigned to the vehicle chassis and is preferably connected to an electrical power system of the vehicle - an on-board power system.

10. System according to Claim 8 or 9, **characterized in that** the second device (15) has its own electrical power source, which is preferably independent of an electrical power source of the first device or of a power source of the vehicle.

11. System according to one of Claims 8-10, **characterized in that** an electrical power source for preferably just one of the two devices (12, 15) is a lithium-ion battery, in particular a lithium-thionyl chloride battery.

12. System according to one of Claims 8-11, **characterized in that** an electrical power source for preferably just one of the two devices (12, 15) has a capacity of less than or equal to 10 Ah.

13. System according to one of Claims 8-12, **characterized in that** an electrical power source for preferably just one of the two devices (12, 15) has an output voltage of approximately 5.4 V or less, in particular approximately 3.6 V.

14. System according to one of Claims 8-13, **characterized in that** the two devices (12, 15) are mounted outside air spring bellows on the vehicle.

15. Electronically regulated air suspension system for a vehicle, having a system according to one of Claims 8-14.

16. Air suspension system according to Claim 15, **characterized by** a valve arrangement which can be activated manually and has the purpose of raising and/or lowering a vehicle body/vehicle chassis.

17. Air suspension system according to Claim 15 or 16, **characterized by** an air spring valve.

18. Air suspension system according to one of Claims 15 to 17, **characterized by** a pressure sensor for measuring the pressure prevailing inside an air spring bellows.

19. Vehicle having a system according to one of Claims 8-14, in particular having an air suspension system according to one of Claims 15 to 18.

## Revendications

1. Procédé de mesure de hauteur dans un véhicule en déterminant l'écart entre le châssis de véhicule et l'essieu de véhicule ou des parties reliées à ceux-ci, dans lequel coopèrent un premier dispositif (12) doté d'un premier émetteur (13) et d'un premier récepteur (14) d'une part et un deuxième dispositif (15) doté d'un deuxième émetteur (16) et d'un deuxième récepteur (17) d'autre part,
dans lequel le premier émetteur (13) génère un champ électromagnétique, le deuxième récepteur (17) détecte le champ électromagnétique, le deuxième dispositif (15) doté du deuxième émetteur (16) génère et émet un signal à partir du champ détecté, lequel est corrélé avec l'écart entre le premier émetteur (13) et le deuxième récepteur (17),
et le premier dispositif (12) doté du premier récepteur (14) reçoit le signal,
**caractérisé en ce que** le deuxième dispositif (15) doté du deuxième émetteur (16) n'émet un signal que si le deuxième récepteur (17) a détecté un changement du champ électromagnétique.

2. Procédé selon la revendication 1, **caractérisé en ce que** le champ électromagnétique généré par le premier émetteur (13) est un champ à une fréquence basse, de préférence inférieure à 135 kHz.

3. Procédé selon la revendication 1 ou 2, **caractérisé en ce que** le signal émis par le deuxième émetteur (16) est un signal électromagnétique dans la gamme des hautes fréquences ou dans la gamme des ultra hautes fréquences, en particulier d'environ 433 MHz ou 868 MHz.

4. Procédé selon la revendication 1 ou l'une des autres revendications, **caractérisé en ce que** le deuxième récepteur (17) détecte l'intensité du champ électromagnétique.

5. Procédé selon la revendication 1 ou l'une des autres revendications, **caractérisé en ce que** le premier dispositif génère un signal de sortie standardisé à partir du signal reçu et fournit le signal.

6. Procédé selon la revendication 1 ou l'une des autres revendications, **caractérisé en ce que** le deuxième dispositif (15) doté du deuxième émetteur (16) n'émet un signal que si le changement du champ électromagnétique dépasse une différence prédéfinie.

7. Procédé selon la revendication 1 ou l'une des autres revendications, **caractérisé en ce que** le signal émis par le deuxième émetteur (16) contient un identifiant d'expéditeur.

8. Système de mesure de hauteur dans un véhicule en déterminant l'écart entre le châssis de véhicule et l'essieu de véhicule ou des parties reliées à ceux-ci, dans lequel coopèrent un premier dispositif (12) doté d'un premier émetteur (13) et d'un premier récepteur (14) d'une part et un deuxième dispositif (15) doté d'un deuxième émetteur (16) et d'un deuxième récepteur (17) d'autre part, en particulier pour effectuer le procédé selon l'une quelconque des revendications précédentes,
dans lequel le premier émetteur (13) est prévu pour générer un champ électromagnétique,
le deuxième récepteur (17) est prévu pour détecter le champ électromagnétique,
le deuxième dispositif doté du deuxième émetteur (16) est prévu pour générer et émettre un signal, le signal étant corrélé avec l'écart entre le premier émetteur (13) et le deuxième récepteur (17),
et le premier dispositif (12) doté du premier récepteur (14) est prévu pour recevoir le signal,
**caractérisé en ce que** le deuxième dispositif (15) doté du deuxième émetteur (16) n'émet un signal que si le deuxième récepteur (17) a détecté un changement du champ électromagnétique.

9. Système selon la revendication 8, **caractérisé en ce que** le premier dispositif (12) est associé au châssis de véhicule et est de préférence relié à un réseau électrique du véhicule, un réseau de bord.

10. Système selon la revendication 8 ou 9, **caractérisé en ce que** le deuxième dispositif (15) présente sa propre source d'énergie électrique qui est de préférence indépendante d'une source d'énergie électrique du premier dispositif ou d'une source d'énergie du véhicule.

11. Système selon l'une quelconque des revendications 8 à 10, **caractérisé en ce qu'**une source d'énergie électrique, de préférence pour un seul des deux dispositifs (12, 15), est une batterie lithium-ion, en particulier une batterie lithium-chlorure de thionyle.

12. Système selon l'une quelconque des revendications 8 à 11, **caractérisé en ce qu'**une source d'énergie électrique, de préférence pour un seul des deux dispositifs (12, 15), présente une capacité inférieure ou égale à 10 Ah.

13. Système selon l'une quelconque des revendications 8 à 12, **caractérisé en ce qu'**une source d'énergie électrique, de préférence pour un seul des deux dispositifs (12, 15), présente une tension de sortie d'environ 5,4 V ou moins, en particulier d'environ 3, 6 V.

14. Système selon l'une quelconque des revendications 8 à 13, **caractérisé en ce que** les deux dispositifs (12, 15) sont installés sur le véhicule à l'extérieur des ressorts pneumatiques.

15. Suspension pneumatique à régulation électronique pour un véhicule, comprenant un système selon l'une quelconque des revendications 8 à 14.

16. Suspension pneumatique selon la revendication 15, **caractérisée par** un ensemble de soupapes à commande manuelle pour soulever et/ou abaisser une carrosserie de véhicule/un châssis de véhicule.

17. Suspension pneumatique selon la revendication 15 ou 16, **caractérisée par** une soupape de suspension pneumatique.

18. Suspension pneumatique selon l'une quelconque des revendications 15 à 17, **caractérisée par** un capteur de pression pour mesurer la pression régnant à l'intérieur d'un ressort pneumatique.

19. Véhicule comprenant un système selon l'une quelconque des revendications 8 à 14, en particulier une suspension pneumatique selon l'une quelconque des revendications 15 à 18.
